# EUROPÄISCHE PATENTSCHRIFT

(11) **EP 1 661 271 B1**
(45) Veröffentlichungstag und Bekanntmachung des Hinweises auf die Patenterteilung: **24.06.2009**
(21) Anmeldenummer: 04766460.2
(22) Anmeldetag: 10.08.2004
(51) Int. Cl.: H04B 10/155

(54) **VERFAHREN ZUR INBETRIEBNAHME VON LASERN IN EINEM NETZWERK**
METHOD FOR STARTING LASERS IN A NETWORK
PROCEDE DE MISE EN MARCHE DE LASERS DANS UN RESEAU

(30) Priorität: 22.08.2003 DE 10338744
(43) Veröffentlichungstag der Anmeldung: 31.05.2006
(73) Patentinhaber: Nokia Siemens Networks GmbH & Co. KG, 81541 München (DE)
(72) Erfinder: STILLING, Bernd, 81379 München (DE)
(86) Internationale Anmeldenummer: PCT/EP2004/051757
(87) Internationale Veröffentlichungsnummer: WO 2005/022783

(56) Entgegenhaltungen:
- EP-A- 1 003 300
- EP-A- 1 130 805
- "ITU-T G.664: Optical safety procedures and requirements for optical transport systems" März 2003 (2003-03), INTERNATIONAL TELECOMMUNICATION UNION , XP002307774 Seite 12 - Seite 18 Abbildung III.3

## Beschreibung

Die Erfindung betrifft ein Verfahren zur Inbetriebnahme von Lasern in einem Netzwerk nach dem Oberbegriff des Patentanspruches 1.

Im Fehlerfall, z. B. bei einem Kabelbruch, kann in einem optischen Netzwerk (optical transport network - OTN in Englisch) Laserstrahlung austreten, die bei entsprechender Intensität zu Augenschäden führen kann. In ITU-T G.664, "Optical Safety Procedures and Requirements for Optical Transport Systems", Juni 1999 sind Verfahren zur Abschaltung bzw. zur Reduktion der austretenden Laserstrahlung für SDH-Netze (SDH - Synchron Digital Hierarchy) und optische Punkt-zu-Punkt-Verbindung spezifiziert. Weiterhin sind in ITU-T G.664 Verfahren spezifiziert, die das Einschalten der Übertragungsstrecke bei der Inbetriebnahme bzw. nach der Behebung eines Fehlers ermöglichen. Abschaltungen von Lasern erfolgen jedoch nicht nur bei fehlerbedingten Fällen, aber auch z. B. aufgrund einer Neukonfiguration eines Netzes.

In ITU-T G.664 wird sowohl ein manuelles als auch ein automatisches Modus zum Einschalten von Lasern beschrieben. Beim manuellen Verfahren wird der Laser manuell eingeschaltet. Die Einschaltdauer beträgt aus Sicherheitsgründen nur 2 s (bis maximal 90 s bei manuellen Tests). Bei intakter Übertragungsstrecke detektiert ein Empfänger an einem Ende einer Übertragungsstrecke das Laserlicht und schaltet nun ebenfalls einen dortigen Laser ein, der in Rückrichtung das Licht einer am Anfang der Übertragungsstrecke angeordneten Senderstelle zuführt. Damit ist die Übertragungsstrecke in Betrieb. Beim automatischen Verfahren wird der abgeschaltete Laser im Abstand von 100-300 s für eine Dauer von 2 s eingeschaltet. Bei intakter Übertragungsstrecke detektiert der Empfänger am Ende der Übertragungsstrecke Licht und schaltet den dortigen Laser ein, der in Rückrichtung das Licht einer am Anfang der Übertragungsstrecke angeordneten Senderstelle zuführt. Durch die Pausen zwischen den Laserpulsen kann sich die Inbetriebnahme der Übertragungsstrecke in diesem Fall um maximal 300 s verzögern.

In einem transparenten optischen Netz werden optische Signale ohne optisch-elektrischer Wandlung geschaltet. Als Beispiel beruht eine bekannte Schaltungstechnik auf die Verwendung von sogenannten MEMS (Micro-Electro-Mechanical System). Das bedeutet, dass im Fall einer nicht geschalteten optischen Verbindung zwischen einem sendeseitigen Laser und einem am Ende der Übertragungsstrecke angeordneten Empfänger der Empfänger kein Licht detektiert und folglich wie im Fehlerfall einen sendeseitigen Laser mit Strahlung in Rückrichtung abschaltet. Die Laser sind somit im Fall von nicht geschalteten optischen Verbindungen zwischen Sender und Empfänger automatisch außer Betrieb gestellt. Wird nun eine optische Verbindung gemäß dem automatischen Modus nach ITU-T G.664 aufgebaut, kann es bei diesem automatischen Verfahren maximal 300 s dauern, bis die Laser eingeschaltet werden. Eine solche lange Verzögerungszeit kann nicht toleriert werden.

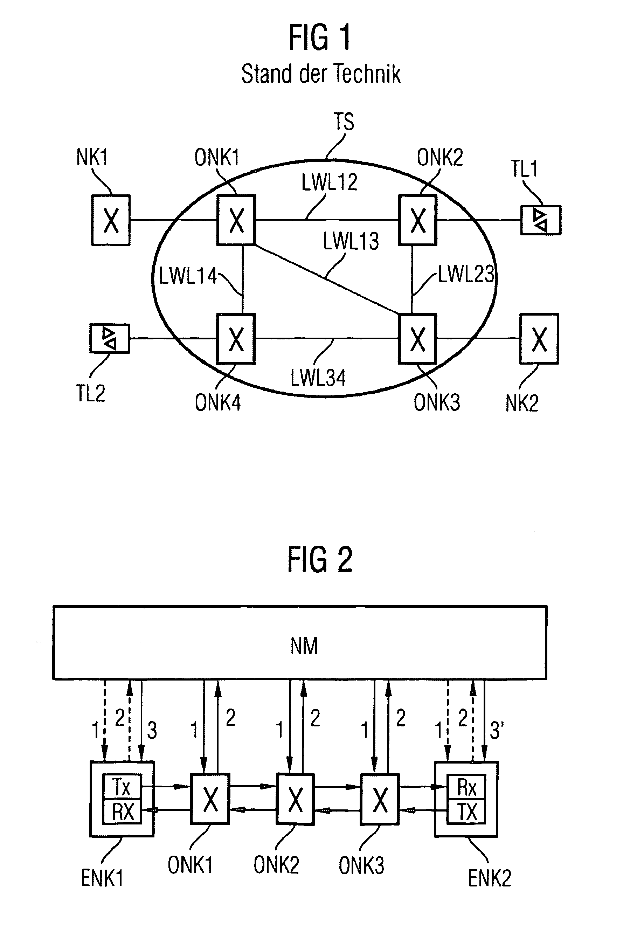

In **Fig. 1** ist als Beispiel ein Netzwerk zur Übertragung optischer Signale dargestellt, bei dem die Ab- und Einschaltung von Lasern gemäß den manuellen und automatischen Moden nach ITU-T G.664 angewendet werden könnte. Ein optisch transparenter Schaltbereich TS des Netzwerks weist mehrere transparente Netzknoten ohne optisch-elektrischen Wandlern - hier vier Elemente ONK1, ONK2, ONK3, ONK4 - auf, die miteinander mittels optischen Fasern LWLij (i < j= 1, 2, 3, 4) verbunden sind und unterschiedliche transparente Schaltungen der übertragenen optischen Signale ermöglichen. Außerhalb des transparenten Schaltbereiches ist mit dem ersten transparenten Netzknoten ONK1 ein sendeseitiges Netzknoten NK1 mit einem elektrisch-optischen Wandler, d. h. mit einer Laserquelle, verbunden. Dem dritten transparenten Netzknoten ONK3 ist ein empfangseitiger Netzknoten mit einem elektrisch-optischen Wandler NK2 geschaltet. Damit können z. B. optische Signale aus dem sendeseitigen Netzknoten NK1, über die transparenten Netzknoten ONK1, ONK3 mit zwischengeschalteter optischer Faser LWL13, bis zum empfangseitigen Netzknoten NK2 übertragen werden. Nun kann auch jeweils an einem der zweiten und vierten transparenten Netzknoten ONK2, ONK4 ein sendeseitiger und/oder empfangseitiger Transponder TL2, TL1 mit Laserquellen und optischen Empfängern geschaltet werden. Tritt ein Fehler z. B. bei der optischen Faser LWL13 im automatischen Modus zur Überwachung im Sinne der Lasersicherheit gemäß ITU-T G.664 auf, bleiben die Laser in den Netzknoten NK1, NK2 sowie in den Transpondern TL1, TL2 mehrere 100 s vor einer Neueinschaltung ausgeschaltet, obwohl eine Umleitung der optischen Signale, sowie ein Schaltverbot zur fehlerhaften optischen Faser LWL13 über andere optische Fasern LWLij als LWL13 eventuell sofort oder in wenigen Sekunden möglich wären.

Beispielweise offenbart EP-A-1 003300 ein Verfahren zur Inbetriebnahme von Lasern gemäß der Empfehlung ITU-T, G.664 in einem mehrere Netzelemente aufweisenden Netzwerk, das eine Restartphase im automatischen Modus initiiert, wohin während der Restartphase im automatischen Modus auf einen anderen Modus umgeschaltet wird, bei dem eine Lasereinschaltung schneller als im automatischen Modus erfolgt.

Aufgabe der Erfindung ist es, ein Verfahren zur Inbetriebnahme von Lasern in einem Netzwerk zur Übertragung optischer Signale anzugeben, das nach Ausschaltung der Laser ihre schnelle Neueinschaltung ermöglicht. Insbesondere sollte die Neueinschaltung der Laser sich nach der Empfehlung ITU-T 8.664 bei einer im automatischen Modus initiierten Restartphase der Inbetriebnahme eignen.

Eine Lösung der Aufgabe erfolgt hinsichtlich ihres Verfahrensaspekts durch ein Verfahren mit den Merkmalen des Patentanspruchs 1.

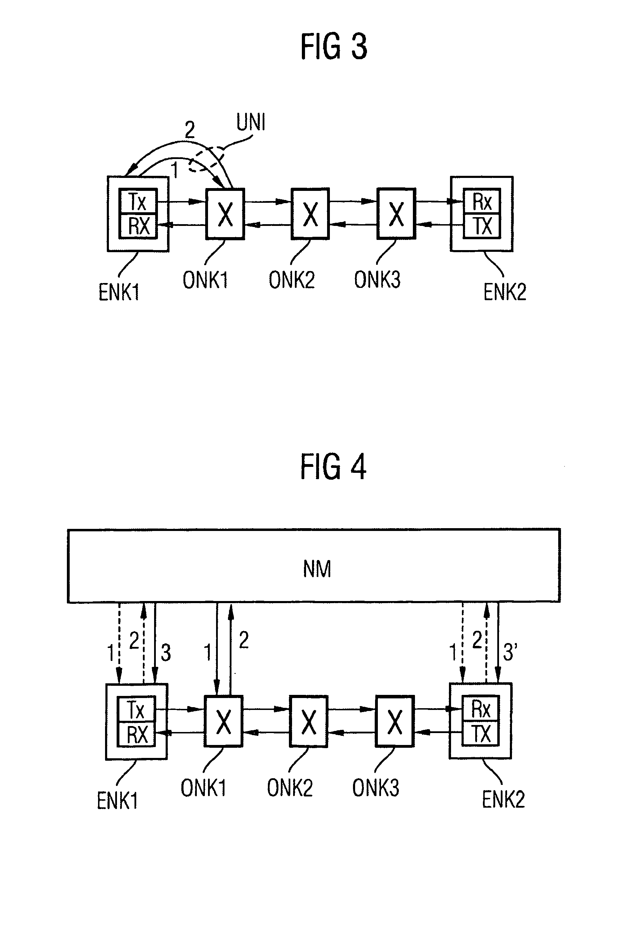

Ausgehend von einem Verfahren zur Inbetriebnahme von Lasern, in einem Netzwerk gemäß der Empfehlung ITU-T, G.664, das vorzugsweise nach einer z. B. Fehlerbedingten oder Netzkonfiguration bezogenen Laserabschaltung eine Restartphase im automatischen Modus initiiert, wird erfindungsgemäß während der Restartphase im automatischen Modus auf einem manuellen Modus umgeschaltet, bei dem eine Laserneueinschaltung schneller als im automatischen Modus erfolgt. Die für die Inbetriebnahme vorgesehene Restartphase im automatischen Modus gemäß der Empfehlung ITU-T, G.664, Seite 8, Figur 3, "Automatic laser shutdown and restart concept including test procedure", die eine Laserneueinschaltung nach 100 bis 300 s ermöglicht, wird durch die Umschaltung auf einen gewählten manuellen Modus mit quasi-sofortiger Lasereineinschaltung erheblich beschleunigt.

Dies ermöglicht eine unverzügliche Neueinschaltung der Laser innerhalb maximal weniger Sekunden. Ferner werden zur Verhinderung eines Unfalls Sicherheitsmaßnahmen vor der Lasereinschaltung getroffen. Dazu werden mittels eines Netzwerkmanagements oder mittels einer Steuerung im Netzelement eine oder mehrerer Verbindungen für eine sichere Übertragung optischer Signale geschaltet. In der Regel dauern solche Schaltvorgänge nur einige Millisekunden bis max. wenige Sekunde, nach diesen wenigstens alle Laser bei dementsprechenden überprüften Verbindungen neu eingeschaltet werden könnten. Im automatischen Modus bleiben diese Laser aber über eine Schaltwartezeit von wenigstens 100 s ausgeschaltet, was zum unnötigen Zeitverlust führt. Durch die Abschaltung des automatischen Modus und die Einstellung eines manuellen Modus, der die Lasereinschaltung sofort oder innerhalb einer viel kürzerer Zeit als die Schaltwartezeit beim automatischen Modus zulässt, wird diese nicht fundierte Wartezeit erheblich verkürzt.

Als Umschaltmodus des automatischen Modus kann einfach der schon in ITU-T G.664 vorgesehene manuelle Modus verwendet werden. Eine von einem Operator durchgeführte manuelle Betätigung kann direkt mittels der automatisch-manuellen Modusumschaltung erfolgen. Damit wird die Einführung eines anderen noch nicht im ITU-T G.664 definierten Standard-Modus eingespart.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 2:: eine optische Verbindung mit Ausschaltung des automatischen Modus mittels eines Netzwerkmanagements,
- Fig. 3:: eine optische automatisch geschaltete Verbindung mit Ausschaltung des automatischen Modus mittels eines "User Network Interface",
- Fig. 4:: eine optische automatisch geschaltete Verbindung mit Ausschaltung des automatischen Modus ohne "User Network Interface",
- Fig. 5:: eine optische Verbindung mit hybriden Netzelementen mit Ausschaltung des automatischen Modus mittels eines Netzwerkmanagements.

In **Fig. 2** ist eine optische Netzverbindung mit einer erfindungsgemäßen Ausschaltung des automatischen Modus mittels eines Netzwerkmanagements dargestellt. Die optische Netzverbindung weist, in einer seriellen Schaltweise, einen Sender ENK1 - allerdings mit Empfänger bei bidirektionaler Übertragung von Signalen -, einen oder mehrere weitere Schaltknoten ONK1, ONK2, ONK3 - hier optische Schalterelemente ohne optisch-elektrischer Wandlung - und anschließend einen Empfänger ENK2 - allerdings mit Sender bei bidirektionaler Übertragung von Signalen - auf. Der Sender bzw. der Empfänger ENK1, ENK2 weisen z. B. einen Laser Tx bzw. eine Photodiode Rx. Die optische Netzverbindung kann als Multiplex-Übertragungssystem zur Übertragung optischer WDM- oder DWDM-Signale vorgesehen werden. Alle Netzelemente - Sender, Schaltknoten, Empfänger - ENK1, ONK1, ONK2, ONK3, ENK2 sind einem Netzwerkmanagement NM verbunden, aus dem zur Konfiguration der optischen Netzverbindung eine erste Meldung 1 jedem Netzelement zugeführt wird. Eine zweite Meldung 2 zur Bestätigung der korrekten Konfiguration wird weiterhin aus jedem Netzelement ENK1, ONK1, ONK2, ONK3, ENK2 dem Netzwerkmanagement zugeführt. Bis dahin untersteht noch das System unter dem automatischen Modus AM gemäß ITU-T G.664, d. h. alle Laser Tx ausgeschaltet sind. Nun anstelle einer verbleibenden Wartezeit zur Neueinschaltung der Laser Tx wird der manuelle Modus MM gemäß ITU-T G.664 aus dem Netzwerkmanagement NM ausgelöst. Dies kann mittels einer aus dem Netzwerkmanagement NM gesendeten dritten Meldung 3 erfolgen, die zu dem Sender ENK1 und/oder dem Empfänger ENK2 übermittelt wird.

In **Fig. 3** ist nun eine Variante der Umschaltung des automatischen Modus AM auf dem manuellen Modus MM gemäß Fig. 2 dargestellt, allerdings ohne Hilfe eines Netzwerkmanagements NM. Dies kann bei automatisch geschalteten Netzwerken angewendet werden, bei denen ein "User Network Interface" UNI zwischen dem Sender ENK1 und dem ersten nachgeschalteten Schaltknoten ONK1 die Konfiguration der gesamten optischen Netzverbindung ENK1, ONK1, ONK2, ONK3, ENK2 mit einer ersten Meldung 1 aus dem Sender ENK1 initiiert bzw. mit einer zweiten Rückmeldung 2 aus dem ersten Schaltknoten ONK1 überprüft. Hier wird die erste Meldung eine Konfigurationsinformation enthalten und über alle Netzelemente bis zum Empfänger ENK2 übertragen. Dort wird die erste Meldung 1 als nun zweite Rückmeldung 2 aus dem Empfänger ENK2 bis zum Sender ENK1 rückwärts gesendet. Die zweite Rückmeldung 2 enthält eine Kontrollinformation zur Überprüfung von möglichen Fehlern in der gesamten optischen Netzverbindung. Bei korrekter Konfiguration der gesamten optischen Netzverbindung ENK1, ONK1, ONK2, ONK3, ENK2 kann die Umschaltung des automatischen Modus AM auf den manuellen Modus MM aus dem Sender ENK1 ausgelöst werden. D. h., dass unverzüglich der Laser Tx im Sender ENK1 sowie, bei bidirektionaler Übertragung, ein Laser Tx im Empfänger ENK2 eingeschaltet werden.

**Fig. 4** zeigt ein weiteres Ausführungsbeispiel gemäß Fig. 2, bei dem zur Initiierung der Konfiguration der gesamten optischen Netzverbindung das Netzwerkmanagement NM die erste Meldung 1 dem Sender ENK1 und dem ersten Schaltknoten ONK1 vermittelt wird. Anschließend sendet jeweils der Sender ENK1 und der erste Schaltknoten ONK1 die zweite Rückmeldung 2 zur Bestätigung des Stands der Konfiguration dem Netzwerkmanagement NM gemäß Fig. 2 zurück. Hier wird kein "User Network Interface" benötigt, da die Initiierung der Konfiguration der optischen Netzverbindung zwischen dem Sender ENK1 und dem ersten nachgeschalteten Schaltknoten ONK1 über das Netzwerkmanagement NM erfolgt. Eventuell kann auch das Netzwerkmanagement NM eine erste und zweite Meldung 1, 2 gemäß Fig. 2 dem Empfänger ENK2 vermitteln. Der Aufbau der optischen Netzverbindung zwischen dem ersten optischen Schaltknoten ONK1 und den nachgeschalteten Netzelementen wird aus dem ersten optischen Schaltknoten ONK1 gemäß Fig. 3 durchgeführt. Nach Bestätigung am Netzwerkmanagement NM der zweiten Rückmeldung 2 gemäß Fig. 2 und bei einer fehlerfreien übermittelten Konfiguration der gesamten optischen Netzverbindung sendet das Netzwerkmanagement NM dem Sender ENK1 und/oder dem Empfänger ENK2 die dritte Meldung 3 zur Auslösung des manuellen Modus MM gemäß Fig. 2 und damit zur Einschaltung der Laser.

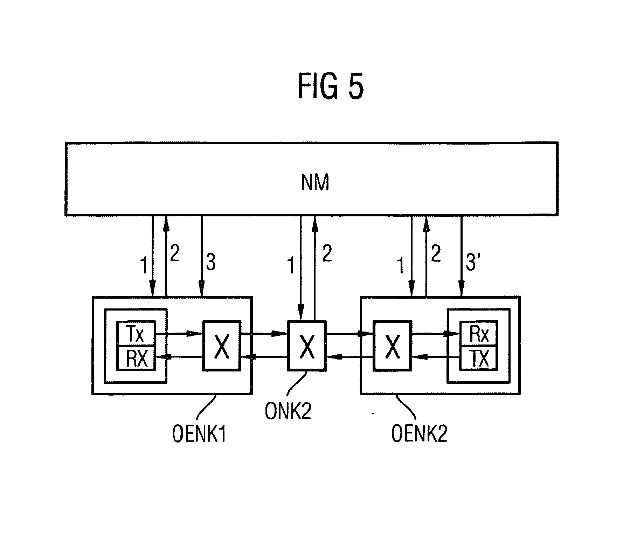

In **Fig. 5** wird eine optische Netzverbindung mit hybriden Netzelementen, bei der gemäß Fig. 2 eine Ausschaltung des automatischen Modus AM mittels des Netzwerkmanagements NM erfolgt. Mit einem hybriden Netzelemente ist ein Netzelement gemeint, dass ein optisches Signal optisch emittieren, schalten, empfangen kann, jedoch zumindest eine elektrische Komponente wie einen Transponder oder einen elektrisch-optischen Wandler aufweist. Werden der Sender ENK1 und der erste Schaltknoten ONK1 aus der Fig. 2 in einem einzigen Netzelement OENK1 zusammengefasst, so entsteht ein hybrides Netzelement. Das gleiche gilt auch für die Zusammenfassung des letzten Schaltknoten ONK3 mit dem Empfänger ENK2 in ein hybrides Netzelement OENK2. Die Auslösung der Umschaltung auf den manuellen Modus MM erfolgt gemäß Fig. 2, 3 oder 4, wobei nun das erste und das letzte Netzelement der optischen Netzverbindung die hybriden Netzelemente OENK1, OENK2 sind.

## Patentansprüche

1. Verfahren zur Inbetriebnahme von Lasern gemäß der Empfehlung ITU-T, G.664 in einem mehrere Netzelemente aufweisenden Netzwerk, das eine Restartphase in einem automatischen Modus initiiert,
wobei
während der Restartphase im automatischen Modus in dem Netzwerk eine optische Netzverbindung zwischen einem ersten und einem zweiten Netzelement konfiguriert und eingerichtet wird, **dadurch gekennzeichnet,**
**dass** ein Stand der Einrichtung der Netzverbindung einer Steuereinheit rückbestätigt wird und
**dass** bei korrekter rückbestätigter Einrichtung eine automatische Umschaltung zum manuellen Modus ausgelöst wird, wodurch eine Lasereinschaltung schneller als im automatischen Modus erfolgt.

2. Verfahren nach Anspruch 1,
**dadurch gekennzeichnet,**
**dass** wenigstens eine optische Netzverbindung von einem zentralen Netzwerkmanagement konfiguriert und eingerichtet wird, dass dem Netzwerkmanagement ein Stand der Einrichtung aller Netzelemente rückgemeldet wird und
**dass** bei korrekter rückgemeldeter Einrichtung das Netzwerkmanagement durch ein Netzelement der Netzverbindung die Umschaltung vom automatischen Modus zum manuellen Modus (MM) auslöst.

3. Verfahren nach Anspruch 1,
**dadurch gekennzeichnet,**
**dass** ein erstes Netzelement eine optische Netzverbindung zu einem zweiten Netzelement über ein oder weitere zwischengeschaltete Netzelemente aufbaut,
und **dass** nach Rückbestätigung des korrekten Aufbaus der optischen Netzverbindung an das erste Netzelement dieses die Umschaltung vom automatischen Modus zum manuellen Modus durchführt.

4. Verfahren nach Anspruch 1,
**dadurch gekennzeichnet,**
**dass** ein erstes Netzelement eine optische Netzverbindung zu einem zweiten Netzelement über ein oder weitere zwischengeschaltete Netzelemente aufbaut,
**dass** zusätzlich ein Netzwerkmanagement vorgesehen ist, das wenigstens eine optische Netzverbindung zu wenigstens einem Netzelement konfiguriert und einrichtet,
**dass** dem Netzwerkmanagement ein Stand der Einrichtung der Netzverbindung rückgemeldet wird und
**dass** bei korrekter rückgemeldeter Einrichtung das Netzwerkmanagement durch ein Netzelement der Netzverbindung die Umschaltung vom automatischen Modus zum manuellen Modus auslöst.

5. Verfahren nach Anspruch 4,
**dadurch gekennzeichnet,**
**dass** das erste und/oder das zweite Netzelement optische Sender und Empfänger mittels elektrischen und/oder optischen Schaltmitteln steuern.

6. Verfahren nach einem der vorhergehenden Ansprüche 2 bis 5, dass die Netzelemente als optische Sender und Empfänger oder als Transponder mit optischen Sendern und Empfängern oder als optische Schaltknoten vorgesehen sind.

## Claims

1. Method for turning on lasers according to recommendation ITU-T, G.664, in a network exhibiting several network elements, which initiates a restart phase in an automatic mode, wherein during the restart phase in automatic mode, an optical network connection is configured and set up between a first and a second network element in the Network, **characterized in that** a status of the setting-up of the network connection is confirmed back to a control unit and
that, with correct confirmed-back setting-up, an automatic switching-over to manual mode is triggered as a result of which a laser turn-on occurs more rapidly than in automatic mode.

2. Method according to Claim 1, **characterized in that** at least one optical network connection is configured and set up by a central network management,
that a status of the setting-up of all network elements is reported back to the network management, and
that, with correct reported-back setting-up, the network management triggers the switching-over from automatic mode to manual mode (MM) via a network element of the network connection.

3. Method according to Claim 1, **characterized in that** a first network element sets up an optical network connection to a second network element via one or further interconnected network elements,
and that after the correct establishment of the optical network connection has been confirmed back to the first network element, the latter carries out the switching-over from automatic mode to manual mode.

4. Method according to Claim 1, **characterized in that** a first network element establishes an optical network connection to a second network element via one or further interconnected network elements,
that additionally a network management is provided which configures and sets up at least one optical network connection to at least one network element,
that a status of the setting-up of the network connection is reported back to the network management, and
that, with correct reported-back setting-up, the network management triggers the switching-over from automatic mode to manual mode via a network element of the network connection.

5. Method according to Claim 4, **characterized in that** the first and/or the second network element control optical transmitters and receivers by means of electrical and/or optical switching means.

6. Method according to one of the preceding Claims 2 to 5, **characterized in that** the network elements are provided as optical transmitters and receivers or as transponders with optical transmitters and receivers or as optical switching nodes.

## Revendications

1. Procédé pour la mise en service de lasers selon la recommandation ITU-T, G.664 dans un réseau présentant plusieurs éléments de réseau, qui amorce une phase de redémarrage dans un mode automatique, une liaison de réseau optique entre un premier et un second éléments de réseau étant configurée et mise en place pendant la phase de redémarrage en mode automatique dans le réseau, **caractérisé en ce qu'**un état de l'équipement de la liaison de réseau est confirmé en retour à une unité de commande et **en ce que**, dans le cas d'un équipement correct confirmé en retour, une inversion automatique en mode manuel est déclenchée, de sorte qu'un enclenchement de laser s'effectue plus rapidement qu'en mode automatique.

2. Procédé selon la revendication 1, **caractérisé en ce qu'**au moins une liaison de réseau optique est configurée et mise en place par une gestion de réseau centrale, **en ce qu'**un état de l'équipement de tous les éléments de réseau est signalé en retour à la gestion de réseau et **en ce que**, avec un équipement correct signalé en retour, la gestion de réseau déclenche par un élément de réseau de la liaison de réseau la commutation du mode automatique en mode manuel (MM).

3. Procédé selon la revendication 1,
**caractérisé en ce qu'**un premier élément de réseau établit une liaison de réseau optique avec un second élément de réseau au moyen d'un ou de plusieurs éléments de réseau intercalés, et **en ce que**, après la confirmation en retour de la configuration correcte de la liaison de réseau optique au premier élément de réseau, celui-ci effectue la commutation du mode automatique en mode manuel.

4. Procédé selon la revendication 1,
**caractérisé en ce qu'**un premier élément de réseau établit une liaison de réseau optique avec un second élément de réseau au moyen d'un ou d'autres éléments de réseau intercalés, **en ce qu'**il est prévu en supplément une gestion de réseau qui configure et met en place au moins une liaison de réseau optique avec au moins un élément de réseau, **en ce qu'**un état de l'équipement de la liaison de réseau est signalé en retour à la gestion de réseau et **en ce que**, avec un équipement correct signalé en retour, la gestion de réseau déclenche par un élément de réseau de la liaison de réseau la commutation du mode automatique en mode manuel.

5. Procédé selon la revendication 4,
**caractérisé en ce que** le premier et/ou le second élément de réseau commandent des émetteurs et des récepteurs optiques à l'aide de moyens de commutation électriques et/ou optiques.

6. Procédé selon l'une quelconque des revendications 2 à 5 précédentes, **caractérisé en ce que** les éléments de réseau sont prévus sous forme d'émetteurs et de récepteurs optiques ou sous forme de transpondeurs avec des émetteurs et récepteurs optiques ou sous forme de noeuds de commutation optiques.
